**Europäisches Patentamt**

**European Patent Office**

**Office européen des brevets**

(19)

(11) Numéro de publication : **0 546 929 A1**

(12)
# DEMANDE DE BREVET EUROPEEN

(21) Numéro de dépôt : **92403328.5**

(22) Date de dépôt : **08.12.92**

(51) Int. Cl.⁵ : **B32B 27/04,** B29C 67/12, B29C 67/14, B29C 67/16, B29B 11/16

(30) Priorité : **13.12.91 FR 9115532**

(43) Date de publication de la demande : **16.06.93 Bulletin 93/24**

(84) Etats contractants désignés : **AT BE CH DE DK ES FR GB GR IE IT LI LU NL PT SE**

(71) Demandeur : **ELF ATOCHEM S.A.** **4 & 8, Cours Michelet La Défense 10** **F-92800 Puteaux (FR)**

(72) Inventeur : **Cognet, Gilles** **Chemin du Bois d AlençonRonsard** **F-27300 Bernay (FR)** Inventeur : **Jacquemet, Régis** **12, rue Youri Gagarine, Appartement 107** **F-27000 Evreux (FR)** Inventeur : **Lamblin, Véronique** **4, rue Lucien Doyen** **F-51000 Reims (FR)**

(74) Mandataire : **Le Guen, Gérard et al** **CABINET LAVOIX 2, place d'Estienne d'Orves** **F-75441 Paris Cédex 09 (FR)**

(54) **Plaque thermoplastique renforcée estampable et articles obtenus à partir de celle-ci.**

(57) Plaque thermoplastique renforcée estampable dont au moins l'une des faces est constituée, de l'extérieur vers l'intérieur, d'au moins trois couches successives abc, dans laquelle :

— a est une matrice constituée d'une résine thermoplastique renforcée par au moins deux charges de natures et/ou de types différents choisies parmi les charges de type lamellaire et de type sphérique ou sensiblement sphérique,

— b est un liant d'interface chimiquement compatible avec la résine thermoplastique de a, et présentant par rapport à celle-ci, une viscosité inférieure aux températures de fabrication et de mise en oeuvre des plaques, et

— c est un renfort consistant en un mat de verre aiguilleté.

Objets obtenus à partir des plaques par estampage.

FIG.1

EP 0 546 929 A1

La présente invention concerne des plaques thermoplastiques renforcées estampables ou TRE qui permettent d'obtenir des objets moulés par estampage, et en particulier des pièces d'aspect pour, par exemple l'industrie automobile.

L'obtention de pièces TRE présentant à la fois un bon aspect de surface, une bonne stabilité dimensionnelle et une masse surfacique pouvant atteindre 5kg/m$^2$ comporte de grandes difficultés.

L'usage des TRE dans l'industrie était jusqu'à présent relativement faible, en raison du mauvais aspect des pièces obtenues limitant leur utilisation à des pièces cachées ou recouvertes de moquette ou tissus.

L'une des causes de cette qualité d'aspect insuffisante est la difficulté d'imprégnation de mats de verre (dont la masse surfacique peut atteindre 900g/m$^2$) par la résine thermoplastique (dont la viscosité à l'état fondu est généralement très élevée).

La présente invention permet de lever cet obstacle et de proposer une structure de plaque TRE pour pièces d'aspect dont la stabilité dimensionnelle est en même temps améliorée.

Plus particulièrement, la présente invention a pour objet une plaque thermoplastique renforcée estampable, dont au moins l'une des faces est constituée, de l'extérieur vers l'intérieur d'au moins trois couches successives abc, dans laquelle :

- a est une matrice constituée d'une résine thermoplastique renforcée par au moins deux charges de natures et/ou de types différents choisies parmi les charges de type lamellaire et de type sphérique ou sensiblement sphérique, dont la viscosité, mesurée avec un rhéomètre capillaire, aux températures de fabrication et de mise en oeuvre des plaques, et à un taux de cisaillement de 20s$^{-1}$, est comprise entre 450 et 2000 Pa.s ;
- b est un liant d'interface chimiquement compatible avec la résine thermoplastique de a, dont la viscosité mesurée dans les mêmes conditions que celle de la matrice a, est comprise entre 10 et 350 Pa.s;
- c est un renfort consistant en un mat de verre aiguilleté.

La matrice a a un coefficient de dilatation thermique linéaire le plus faible possible, pour diminuer le retrait différentiel matrice/mat de verre lors du refroidissement de la matière après démoulage.

La matrice du TRE selon l'invention peut contenir tout type de résines thermoplastiques seules, en mélange et/ou copolymérisées, parmi lesquelles on peut citer :

- les résines polyesters telles que le polyéthylène téréphtalate (PET), le polybutylène téréphtalate (PBT),
- les résines polyamides telles que les polyamides aliphatiques PA-6, PA-6/6, PA-11, PA-12, PA-12/12, leurs mélanges et/ou leurs copolymères,
- les résines polyoléfines seules, en mélange et/ou copolymérisées telles que le polypropylène (PP), le polyéthylène (PE), le polyméthylpentène,
- les résines polysulfones aromatiques, telles que le polysulfone, le polyallylsulfone,
- les résines polyester polyacétal sulfones,
- les résines polycarbonates,
- les résines polyétherimides,
- les résines polyester cétones,
- les résines ABS,
- les résines acryliques.

Parmi les résines thermoplastiques préférées, on citera tout particulièrement les résines à base de PP, PET, PBT, les mélanges ou alliages à base de PP/PA-6 ou PP/PA-6.6 et notamment ceux décrit dans la demande de brevet FR 2 629 090.

On peut également incorporer à ces résines divers additifs tels qu'agents anti-oxydant, anti-UV, agents retardateurs de combustibilité, plastifiants, colorants, pigments, agents antistatiques, stabilisants thermiques, etc...

Le pourcentage de résines est en général compris entre 30 et 80 % du poids total du TRE et/ou entre 53 et 90 % du volume total de TRE.

Les charges de renforcement selon l'invention sont des charges (minérales) de type lamellaire ou de type sphérique ou sensiblement sphérique. En général, elles ont une granulométrie moyenne inférieure ou égale à 80 μm et de préférence comprise entre 1 et 40 μm.

Les charges de type lamellaire utilisées dans l'invention sont de natures diverses et comprennent notamment le mica, la wollastonite et les whiskers (rapport de forme variant de 30 à 300).

Les charges de type sphérique ou sensiblement sphérique utilisées dans l'invention sont de natures diverses et comprennent notamment le talc, des billes de verre pleines ou creuses, et CaCO$_3$.

De préférence, la résine thermoplastique de la matrice a est renforcée par au moins trois charges, dont l'une au moins est de nature et/ou de type différent(s) de celui(ceux) des autres charges.

Le pourcentage de charges de renforcement est en général compris entre 14 et 50 % du poids total du TRE et/ou entre 6 et 40 % du volume total, et de préférence entre 27 et 35 % du volume total.

L'épaisseur de la couche de matrice a est comprise entre 0,3 et 1,5 mm, et de préférence entre 0,5 et 0,7 mm.

L'utilisation d'un liant d'interface b, chimiquement compatible avec la matrice a et plus fluide que celle-ci aux températures de fabrication et de mise en oeuvre de la plaque TRE, a pour résultat une amélioration des propriétés mécaniques et de l'aspect de surface de la pièce TRE finie.

La compatibilité chimique du liant d'interface b vis-à-vis de la matrice a, peut être obtenue par un liant de nature chimique identique à (ou proche de) celle de la matrice thermoplastique a.

Les fonctions essentielles du liant consistent dans le mouillage, l'imprégnation du mat de verre de la couche c, la dispersion des mèches de verre de cette couche, et l'adhésion d'interface entre la matrice a et les fibres de verre.

L'utilisation d'un liant b fluide supprime les ségrégations de fibres de verre (fibres sèches) dans les zones de fluage de la matière, et facilite l'entraînement des fibres de verre par la résine thermoplastique pendant l'estampage. On obtient ainsi un aspect de surface amélioré et une meilleure stabilité dimensionnelle des pièces estampées.

D'autre part, l'épaisseur de la couche de liant d'interface b est de préférence la plus faible possible, tout en restant suffisante pour obtenir le mouillage et l'imprégnation voulus du mat de verre, et l'adhésion d'interface souhaitée entre la matrice a et le mat de verre c.

En effet, la demanderesse a observé qu'une réduction de l'épaisseur du film de liant permet d'améliorer l'aspect de surface des pièces, en diminuant le différentiel de coefficients de dilatation thermique linéaire de la matrice a et de l'ensemble liant d'interface b - mat de verre c.

Le renfort c est un mat de verre aiguilleté. Le mat de verre est constitué de fibres de verres dont la distribution est aléatoire dans le plan ; classiquement chacun des filaments de verre est ensimé, ce qui assure un collage des filaments d'une même mèche. Les mèches sont reliées les unes aux autres par l'intermédiaire d'un liant, dont la nature chimique peut être, de préférence, mais n'est pas nécessairement, identique à (ou proche de) celle du liant d'interface b.

L'aiguilletage du mat de verre permet d'améliorer sa fluabilité et l'imprégnation des mèches de verre par la résine thermoplastique.

Les mats les plus souvent rencontrés sont constitués de fibres coupées de longueur moyenne égale à environ 50 mm. On peut utiliser, selon la présente invention, un mat constitué de fils ou filaments continus de type UNIFILO® avec un aiguilletage, qui peut par exemple être obtenu selon la demande de brevet FR 2.617.208.

En général on peut utiliser un mat de masse surfacique comprise entre 225 et 900 g/m$^2$, et de préférence comprise entre 300 et 600 g/m$^2$.

La masse linéique du mat peut varier en général entre 10 et 125 tex pour des fils qui ont un diamètre moyen de préférence compris entre 5 et 30 μm et avantageusement on utilise un mat aiguilleté de masse linéique compris entre 10 et 25 tex et de diamètre moyen compris entre 10 et 20 μm.

Le pourcentage de mat de verre au sein du TRE est en général compris entre 15 et 40 % du poids total du TRE et/ou entre 8 et 20 % en volume et de préférence entre 8 et 12 % du volume total du TRE.

Selon un mode de réalisation préféré de l'invention, les deux faces de la plaque TRE sont constituées, de l'extérieur vers l'intérieur, d'au moins trois couches successives abc.

Selon un autre mode de réalisation de l'invention, les plaques TRE comportent une ou plusieurs épaisseurs d'une structure à quatre couches successives abca ou à cinq couches successives abcba.

Le procédé de fabrication des plaques TRE met en oeuvre une technique classique d'obtention de produits multicouches, adaptée aux caractéristiques de l'invention ; il se déroule en général selon les étapes suivantes :

- on procède au compoundage des résines thermoplastiques auxquelles on incorpore les charges de renforcement et éventuellement divers additifs;
- on met ensuite la résine compoundée sous forme de feuille, d'épaisseur en général comprise entre 0,3 et 1,5 mm et de préférence entre 0,5 et 0,7 mm;
- on réalise alors une feuille bicouche matrice thermoplastique a/liant d'interface b par un procédé de coextrusion ou par couchage du liant sur la feuille de matrice. Le liant b est ensuite positionné du côté du mat de verre c.

On procède alors au laminage de la plaque TRE. On préchauffe l'ensemble par exemple par conduction à une température supérieure à la fusion de(s) résine(s) thermoplastique(s) puis on le soumet à une pression en général de l'ordre de 3 à 10 bars afin d'imprégner le mat, un fluage de 10 % environ de la matière étant observé.

On obtient ainsi une plaque TRE selon l'invention.

Il s'agit d'un semi-produit que l'on peut alors transformer en articles moulés de forme plus ou moins complexe selon un procédé d'estampage connu en soi. L'estampage peut être effectué sur une forme déterminée découpée dans une plaque TRE selon l'invention, ou sur plusieurs telles formes superposées.

L'invention a également pour objet les articles et pièces moulés obtenus par estampage d'une ou plusieurs plaques TRE selon l'invention, l'une au moins des surfaces de ces articles et pièces étant constituée, de l'extérieur vers l'intérieur, d'au moins trois couches successives abc, telles que précédemment définies.

On régule la température du moule lors de l'estampage qui peut dépendre de la nature de(s) résine(s) thermoplastique(s) utilisée(s).

A titre indicatif, pour des résines à base de polypropylène, la température est comprise entre 30 et 90°C et pour des résines à base polyester (PET, PBT) elle est comprise entre 100 et 160°C.

Les articles moulés selon l'invention peuvent être utilisés dans de nombreux domaines comme pièces d'aspect.

A titre d'exemples, on peut citer des applications possibles :
- dans le domaine automobile pour la réalisation notamment de capots, portières, renforts de pare-chocs , caches-culbuteurs, carters boîte d'embrayage, coques de sièges, supports de batterie, accoudoirs, écrans anti bruit...
- pour la réalisation d'antennes paraboliques
- pour la réalisation de valises, mallettes, boîtes d'instruments de musique.

Dans les exemples qui suivent, on évalue :
- les caractéristiques mécaniques des TRE en mesurant la résistance en flexion 3 pannes selon la norme ISO 178,
- l'aspect de la surface des TRE dans la zone de figeage de la matière est évalué à partir des critères de profil R, (norme E 05 015), W, et de la mesure de l'indice d'Ashland $I_A$, retenus dans l'automobile française,
- R correspond à l'amplitude de la micro-rugosité du matériau (c'est-à-dire aux irrégularités géométriques telles que la distance entre 2 pics de ces irrégularités est comprise entre 0 et 500 $\mu$m), et est égal à la différence d'altitude "z" entre la crête maximale et le creux minimal relevé sur un pas inférieur à 500 $\mu$m;
- W correspond à l'ondulation du matériau (c'est-à-dire aux irrégularités géométriques telles que la distance entre 2 pics de ces irrégularités est comprise entre 1 et 4 cm), et est égal à la différence d'altitude entre la crête maximale et le creux minimal relevé entre 1 et 4 cm;
- l'indice d'Ashland $I_A$ exprime les déformations de grandes longueurs d'onde (entre 6 mm et 10 cm), qui sont quantifiées par un analyseur de surface dont le principe est le suivant.

Un système laser balaie la surface à analyser par 21 lignes successives (surface : 25,4 cm x 25,4 cm = 10 inch x 10 inch).

L'image de ces lignes est réfléchie par la pièce sur un écran puis captée par une caméra vidéo et digitalisée par un micro-ordinateur.

Pour chaque ligne, l'ordinateur calcule le polynôme du 3ème degré qui suit au mieux l'image digitalisée puis calcule la moyenne des écarts (200 points par ligne) entre ce polynôme et l'image digitalisée.

Ces 21 moyennes des écarts sont ensuite additionnées et corrigées par un facteur de calibration pour mesurer l'indice d'Ashland ($I_A$).

- L'aspect de la surface des TRE dans la zone de fluage de la matière est évaluée à partir d'une cotation visuelle.

Les différentes cotations de l'aspect de surface sont :
- <u>aspect excellent</u> : pas de fibres de verre visibles en surface de la pièce (aspect de surface identique à la zone de figeage de la matière).
- <u>aspect bon</u> : les fibres de verre apparentes correspondent à 20 % de la surface d'une zone considérée.
- <u>aspect moyen</u> : les fibres de verre apparentes correspondent à 50 % de la surface d'une zone considérée.
- <u>aspect mauvais</u> : les fibres de verre apparentes correspondent à 80 % de la surface de la zone considérée.

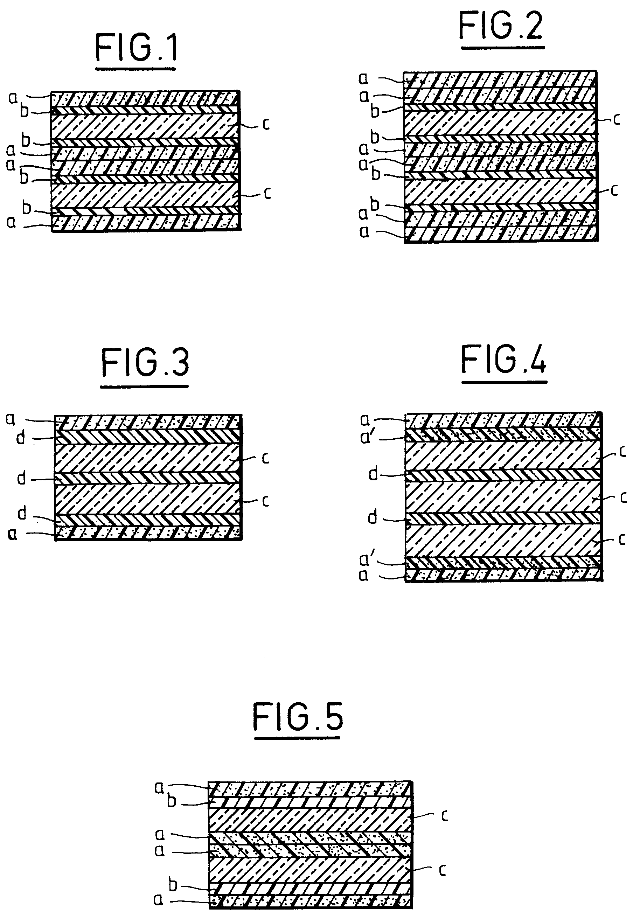

Les figures représentent des structures multicouches en coupe. Seules les figures 1 et 5 correspondent à des structures conformes à la présente invention.

La figure 1 représente une structure à dix couches abcbaabcba, a, b et c étant tels que définis précédemment, ce qui est également le cas des autres figures. Cette structure sera dite de type 1 dans la suite.

La figure 2 représente une structure à douze couches aabcbaabcbaa, qui sera dite de type 2.

La figure 3 représente une structure à sept couches adcdcda, qui sera dite de type 3 et dans laquelle d est une couche thermoplastique non chargée, ce qui est également le cas de la figure 4.

La figure 4 représente une structure à neuf couches aa'cdcdca'a, qui sera dite de type 4, et dans laquelle a' est une couche thermoplastique chargée, mais de composition différente de celle de a.

La figure 5 représente une structure à huit couches abcaacba, qui sera dite de type 5.

Les exemples 6, 7 et 8 suivants, mettant respectivement en oeuvre des structures de type 3, 2 et 4, comparés aux exemples 1 à 4 d'une part et 5 d'autre part, mettant respectivement en oeuvre des structures de types 1 et 5, montrent que ces dernières, conformes à la présente invention, permettent d'obtenir un meilleur aspect de surface, et de meilleures propriétés mécaniques.

Les exemples suivants illustrent l'invention.

## EXEMPLES 1 :

Les enseignements de cet exemple sont multiples. Dans les exemples 1A à 1D, on fait varier les compositions de la couche de matrice a, et l'on dégage deux compositions de la couche de matrice a, et l'on dégage deux compositions meilleures quant aux propriétés mécaniques et à l'aspect de surface qu'elles permettent d'obtenir : les compositions F$\phi$ et F1, conformes à la présente invention.

Les exemples 1C, 1E, 1F, 1H et 1I ne diffèrent que par l'épaisseur de la couche de liant b, qui est même supprimée dans le sous-exemple 1H, tandis que l'exemple 1G concerne une couche de matrice a seule.

Dans un ko-malaxeur BUSS monovis, on procède au compoundage d'une résine thermoplastique à base de PP et de une ou plusieurs charges de renforcement après avoir procédé à un pré-mélange des constituants à sec au tonneau. La température du malaxeur est régulée à 200°C.

La résine thermoplastique est un PP de melt index MI = 40 mesuré selon la norme ASTM D 1239 (à 230°C sous 2,16 kg).

Selon les exemples 1A à 1I, on ajoute une ou plusieurs charges de renforcement (mica, billes de verre pleines (BVp), talc ou $CaCO_3$) dans les proportions indiquées dans le tableau. Ceci constitue la matrice.

Le mica utilisé a une granulométrie moyenne de 30 à 40 $\mu$m avec un facteur de forme de 30-50.

Les BVp utilisées ont une granulométrie moyenne de 15 à 20 $\mu$m.

Le $CaCO_3$ utilisé a une granulométrie moyenne de 1,1 $\mu$m.

Le talc utilisé à une granulométrie moyenne de 3 à 5 $\mu$m.

Une fois compoundée, la matrice a des exemples 1A à 1F est ensuite coextrudée avec un liant d'interface b à base de PP maléisé (MI = 400 à 230°C sous 2,16 kg ; taux pondéral de maléisation : 5000 ppm), dans une extrudeuse SAMAFOR 60/28D.

On obtient une feuille bicouche dont l'épaisseur de la couche de matrice est égale à 0,65 mm et l'épaisseur de la couche de liant égale à 0,1 mm pour les exemples 1A à 1D.

Pour les exemples 1E, 1F, 1H et 1I, l'épaisseur de la couche de liant est respectivement égale à 0,14 mm, 0,07 mm, 0 mm et 0,03 mm.

On procède ensuite au laminage d'une structure TRE de type 1, représentée à la figure 1, selon l'invention, constituée de 4 feuilles bicouches ab telles que précédemment décrites entre lesquelles on interpose deux mats de verre aiguilleté C du côté de la couche de liant d'interface b. Le mat aiguilleté UNIFILO (aig n° 6)(masse surfacique:450g/m$^2$ ; masse linéique : 25 tex) est préparé selon le procédé de la demande FR 2.617.208 avec les conditions d'aiguilletage suivantes :

- vitesse d'avance du mat : 2 m/mn
- profondeur de pénétration des aiguilles : 26 mm
- nombre de coups/cm$^2$ : 7,3
- vitesse de frappe : 150 coups/min.

L'ensemble est préchauffé par conduction entre les plateaux d'une presse à 220°C pendant 3 mn sous une pression de 1 bar, puis comprimé à la même température sous 6 bars pendant 30 s.

La plaque TRE ainsi obtenue a une épaisseur égale à 3,6 mm.

La plaque TRE est ensuite découpée, puis préchauffée par conduction entre les plateaux d'une presse de 225°C.

Trois disques de 300 mm de diamètre sont découpés dans la plaque TRE ainsi préchauffée et empilés dans un moule OBJET-TYPE de 500 mm de diamètre dont la température est régulée à 60°C où la pièce d'épaisseur 3 mm est maintenue pendant 40s sous une pression de 200 bars.

On mesure pour les pièces TRE des exemples 1A à 1I leurs propriétés mécaniques et détermine leur aspect de surface tel qu'indiqué plus haut ainsi que pour une pièce réalisée uniquement avec la matrice (composition identique) de l'exemple 1C qui sert de référence du point de vue de l'aspect de surface (exemple 1G).

Les résultats sont réunis dans le tableau (exemples 1A - I).

Les matrices thermoplastiques F$\phi$ et F1 selon l'invention donnent les meilleurs résultats (ex 1 A à 1D).

D'autre part,
- la pièce finie à base de matrice F1 et de mat de verre présente de meilleures propriétés mécaniques qu'une couche de matrice F1 seule (ex 1G comparé à 1C, 1E, 1F, 1H et 1I), et
- la réduction de l'épaisseur de la couche de liant d'interface de 140 à 70 $\mu$m (ex 1E, 1C et 1F) a pour conséquence aussi bien une amélioration des propriétés mécaniques de la pièce moulée finie que de son aspect de surface ; par contre pour une épaisseur de 30 μm (ex 1I), on observe des propriétés mécaniques similaires à celles obtenues avec une épaiseur de 70 μm, mais une détérioration de l'aspect de surface ; en l'absence de liant (ex 1H), la détérioration est importante à tous niveaux par rapport aux exemples 1C, 1E, 1F, 1I. Il semble donc dans le cas présent que l'épaisseur optimale soit proche de 70 μm.

EXEMPLES 2 :

Par rapport à l'exemple 1D, seule la nature du liant d'interface b a été modifiée. Ainsi l'exemple 2A met en oeuvre un liant b chimiquement compatible avec la résine, mais trop visqueux, tandis que l'exemple 2B décrit un liant fluide, mais non chimiquement compatible avec la résine a.

Les meilleures caractéristiques sont atteintes à l'exemple 1D selon l'invention.

On réalise des pièces TRE dont la résine thermoplastique est à base de polypropylène de MI = 40 dans les mêmes conditions que décrites dans l'exemple 1.

La résine thermoplastique est renforcée avec plusieurs agents de renforcement (matrice Fφ décrite dans le tableau).

La structure de la plaque TRE est du type 1.

Les conditions d'aiguilletage du mat de verre UNIFILO utilisé sont identiques au mat des exemples 1.

La pièce 2A est réalisée à partir d'un liant PP maléisé (MI = 11 à 230°C ; 2,16 kg ; taux pondéral de maléisation : 1500 ppm) dont l'épaisseur est égale à 0,1 mm.

La pièce 2B est réalisée à partir d'un liant EVA (MI = 500 à 230°C ; 2,16 kg ; taux d'acétate de vinyl : 18 %) dont l'épaisseur est égale à 0,1 mm.

Les résultats sont réunis dans le tableau.

L'exemple 2A comparé à l'exemple 1D montre que l'utilisation d'un liant d'interface visqueux, bien que chimiquement compatible, provoque dans ce cas une faible baisse des propriétés mécaniques, et une dégradation significative de l'aspect de surface.

La baisse de ces propriétés est encore plus importante dans le cas d'un liant d'interface fluide mais non compatible chimiquement (ex 2B).

EXEMPLES 3 :

Par rapport à l'exemple 1D, seule la nature de l'aiguilletage est modifiée. Cet exemple met en évidence la meilleure adaptation de l'aiguilletage n° 6, mis en oeuvre à l'exemple 1D, pour réaliser l'invention.

On réalise des pièces TRE dont la résine thermoplastique est à base de polypropylène de MI = 40 dans les mêmes conditions que décrites dans les exemples 1 et 2 (structure TRE de type 1).

La résine thermoplastique est renforcée avec plusieurs agents de renforcement (matrice Fφ décrite dans le tableau).

La pièce de l'exemple 3A est réalisée à partir d'un mat aiguilleté ( masse surfacique 450 g/m$^2$ ; masse linéique 25 tex) (aig n° 1) dont les conditions d'obtention sont définies ci-dessous :
- vitesse d'avance du mat : 2,4 m/min
- profondeur de pénétration des aiguilles : 26 mm
- nombre coups/cm2 : 11
- vitesse de frappe : 150 coups/min.

La pièce de l'exemple 3B est réalisée à partir d'un mat aiguilleté (masse surfacique 450 g/m2 ; masse linéique 25 tex) (aig n° 4) dont les conditions d'obtention sont définies ci-dessous :
- vitesse d'avance du mat : 1,4 m/min
- profondeur de pénétration des aiguilles : 30 mm
- nombre de coups/cm2 : 18
- vitesse de frappe : 150 coups/min.

La pièce de l'exemple 3C est réalisée à partir d'un mat UNIFILO (masse surfacique 450 g/m2 ; masse linéique 25 tex) standard (non aiguilleté).

Les résultats sont réunis tans le tableau.

La comparaison des exemples 1D, 3A, 3B, 3C, permet d'établir le classement suivant du mat de verre le plus approprié à la mise en oeuvre de la présente invention vers le mat de verre le moins approprié :

aig. n° 6 > aig. n° 1 > aig. n° 4 > standard non aiguilleté.

EXEMPLE 4 :

Par rapport aux autres exemples, l'exemple 4A met en oeuvre une matrice thermoplastique a à base de PET, permettant également d'obtenir de très bonnes caractéristiques mécaniques et d'aspect de surface.

Dans un ko-malaxeur BUSS monovis, on procède au compoundage d'une résine thermoplastique à base de PET et de plusieurs charges de renforcement après avoir procédé à un pré-mélange des constituants à sec au tonneau. La température du malaxeur est régulée à 280°C.

La résine thermoplastique est un PET de viscosité intrinsèque égale à 0,81 (mesurée pour 150g de PET dans 30 g d'acide dichloracétique).

Une fois compoundée, la matrice, dont la composition est décrite dans le tableau, est ensuite coextrudée avec un liant à base de PET (de même nature chimique que la résine) dans une extrudeuse SAMAFOR 60/28 D.

On obtient une feuille bicouche dont l'épaisseur de la couche de matrice est égale à 0,65 mm et l'épaisseur de la couche de liant égale à 0,13 mm.

On procède ensuite au laminage d'une structure TRE de type 1 selon l'invention tel que décrit à l'exemple 1.

Le mat de verre aiguilleté (masse surfacique : 450 g/m2 ; masse linéique : 25 tex) (aig n° 6) est élaboré dans les mêmes conditions que le mat des exemples 1 et 2.

L'ensemble est préchauffé par conduction entre les plateaux d'une presse à 270°C pendant 4 mn, sous une pression de 1 bar, puis comprimé à la même température sous 6 bars pendant 30 s.

La plaque TRE est ensuite découpée, puis préchauffée par conduction entre les plateaux d'une presse à 270°C.

Trois disques de 300 mm de diamètres sont découpés dans la plaque TRE ainsi préchauffée et empilés dans un moule OBJET-TYPE circulaire de 500 mm de diamètre dont la température est régulée à 150°C où la pièce d'épaisseur 3 mm est maintenue pendant 60s sous une pression de 200 bars.

Les résultats, réunis dans le tableau, montrent que l'utilisation d'une matrice a à base de PET permet également d'obtenir des caractéristiques satisfaisantes.

EXEMPLE 5 :

L'exemple 5A met en oeuvre une autre structure selon l'invention, à savoir une structure de type 5, qui, comme la structure de type 1, permet d'obtenir des caractéristiques de la pièce TRE finie satisfaisantes.

On réalise des pièces TRE à partir d'une matrice constituée d'une résine thermoplastique à base de polypropylène de MI = 40 et renforcée par plusieurs agents de renforcement (composition matrice F1 décrite dans le tableau - identique à l'exemple 1C).

La structure de la plaque TRE est du type 5 représenté à la figure 5.

Les couches a sont constituées d'une feuille de matrice F1 dont l'épaisseur est égale à 0,65 mm.

Les couches b sont constituées par un film de PP maléisé (MI = 400 à 230°C ; 2,16 kgs ; taux pondéral de maléisation : 5000 ppm) dont l'épaisseur est égale à 0,2 mm.

Les couches c sont constituées par un mat de verre aiguilleté (aig n° 6) (masse surfacique : 450 g/m2 ; masse linéique 25 tex) qui est identique au mat de l'exemple 1C.

Les conditions de laminage à chaud de la structure TRE et les conditions de transformation de la pièce sont identiques à celles de l'exemple 1.

Les résultats sont réunis dans le tableau.

La structure TRE du type 5 selon l'invention présente des résultats satisfaisants.

EXEMPLE 6 :

Cet exemple 6A, comme les exemples suivants 7A et 8A, montre la supériorité des structures de types 1 et 5 selon l'invention, sur, respectivement, les structures de types 3, 2 et 4.

On réalise des pièces TRE à partir d'une matrice (nommée F1) dont la composition est identique à l'exemple 1C (tableau).

La structure de la plaque TRE est du type 3 représenté à la figure 3.

Les couches a sont constituées par une feuille de matrice F1 dont l'épaisseur est égale à 0,65 mm.

Les couches d sont constituées par une feuille de PP de base MI = 40 d'épaisseur 0,65 mm.

Les couches c sont constituées par un mat de verre aiguilleté qui est identique à celui de l'exemple 1C.

Les résultats sont réunis dans le tableau.

La structure TRE du type 3 présente des résultats moins bons que les structures TRE de types 1 (ex 1C),

7

et 5 (ex 5A).

EXEMPLE 7 :

On réalise des pièces TRE à partir d'une matrice (nommée F1) dont la composition est identique à celle de l'exemple 1C.

La structure de la plaque TRE est du type 2 représenté à la figure 2.

Les couches a sont constituées par une feuille de matrice F1 dont l'épaisseur est égale à 0,65 mm.

Les couches b sont constituées par un film de liant PP maléisé (MI = 400 à 230°C ; 2,16 kg ; taux pondéral de maléisation = 5000 ppm) dont l'épaisseur est égale à 100 ppm.

Les couches c sont constituées par un mat de verre aiguilleté qui est identique à celui de l'exemple 1C.

Les résultats sont réunis dans le tableau. La structure TRE du type 2 présente des résultats moins bons que les structures TRE de types 1 (ex 1C), et 5 (ex 5A).

EXEMPLE 8 :

On réalise des pièces TRE à partir d'une matrice (nommée Fφ) dont la composition est identique à celle de l'exemple 1D. La structure de la plaque TRE est du type 4 représenté à la figure 4. Les couches a sont constituées d'une feuille de matrice Fφ dont l'épaisseur est égale à 0,65 mm.

Les couches a' sont constituées d'une résine thermoplastique renforcée par des billes de verre pleines (composition définie dans le tableau et conditions du procédé identiques à la matrice Fφ ou F1) dont l'épaisseur de la feuille est égale à 0,65 mm.

Les couches c sont constituées d'un mat de verre aiguilleté qui est identique à celui de l'exemple 1D.

Les couches d sont constituées d'une feuille de PP de base MI = 40 à 230°C ; 2,16 kg dont l'épaisseur est égale à 0,65 mm.

Les résultats, consignés dans le tableau sont moins bons que dans le cas des structures TRE de types 1 (ex 1D), et 5 (ex 5A).

## TABLEAU

| Ex | COMPOSITION DU TRE | | | STRUCTURE | FLEXION 3 PANNES | | ASPECT DE SURFACE | | | |
|---|---|---|---|---|---|---|---|---|---|---|
| | | | | | | | Zone de figeage | | | Zone de fluage |
| | COMPOSITION Matrice a | LIANT D'INTERFACE B | MAT DE VERRE C | | E(Mpa) | σR (Mpa) | R(µm) | W(µm) | $I_A$ | Evaluation visuelle |
| 1A | 100 % PP | PPm (e=100µm) | UNIFILO aig n°6 | TYPE 1 | 3500 | 110 | 1,6 | 16 | 350 | BON |
| 1B | 50 % PP 50 % Mica | PPm (e=100µm) | UNIFILO aig n°6 | 1 | 6845 | 115 | 0,8 | 12 | 220 | MOYEN |
| 1D | 40 % PP 20 % Mica 30 % BVp 10 % talc (Matrice Fφ) | PPm (e=100µm) | UNIFILO aig n°6 | 1 | 5200 | 119 | 1 | 10 | 160 | BON |
| 3A | Fφ | PPm | UNIFILO aig n°1 | 1 | 5300 | 100 | 1,1 | 11 | 180 | BON |
| 3B | Fφ | PPm | UNIFILO aig n°4 | 1 | 5100 | 85 | 1,1 | 14 | 200 | MAUVAIS |
| 3C | Fφ | PPm | UNIFILO Standard | 1 | 5400 | 120 | 1,2 | 19 | 350 | MAUVAIS |
| 2A | Fφ | OREVAC F (PPm visqueux) | UNIFILO aig n°6 | 1 | 5000 | 110 | 1,1 | 11 | 175 | MAUVAIS |
| 1C | 40 % PP 20 % Mica 20 % BVp 20 % talc (Matrice F1) | PPm (e=100µm) | UNIFILO aig n°6 | 1 | 5200 | 115 | 1 | 10 | 173 | EXCELLENT |
| 1E | F1 | PPm (e=140µm) | UNIFILO aig n°6 | 1 | 4500 | 105 | 1,2 | 12 | 185 | EXCELLENT |
| 1F | F1 | PPm (e=70µm) | UNIFILO aig n°6 | 1 | 5700 | 120 | 1 | 10 | 170 | EXCELLENT |

EP 0 546 929 A1

# TABLEAU ( SUITE)

| | COMPOSITION DU TRE | | | | | STRUCTURE | FLEXION 3 PANNES | | ASPECT DE SURFACE | | | |
|---|---|---|---|---|---|---|---|---|---|---|---|---|
| | | | | | | | E(Mpa) | $\sigma$R (Mpa) | Zone de figeage R($\mu$m) | W($\mu$m) | $I_A$ | Zone de fluage Evaluation visuelle |
| 1H | F1 | PAS DE LIANT (e=0μm) | UNIFILO aig n°6 | | | 1 | 4300 | 70 | 1,1 | 14 | 220 | MAUVAIS |
| ?I | F1 | PPm (e=30μm) | UNIFILO aig n°6 | | | 1 | 5800 | 120 | 1,1 | 12 | 190 | MOYEN |
| ?B | Fφ | EVA fluide (e=100μm) | UNIFILO aig n°6 | | | 1 | 4200 | 70 | 1,2 | 12 | 180 | MAUVAIS |
| ?A | 55 % PET 20 % Mica 20 % BVp 5 % BVp | PET T86 (e=130μm) | UNIFILO aig n°6 | | | 1 | 9200 | 110 | 1,2 | 12 | 220 | EXCELLENT |
| ?C | F1 | - | 0 | | | 1 | 3500 | 32 | 0,8 | 3 | 60 | EXCELLENT |
| FX | COUCHE 1 Surface | COUCHE 2 | COUCHE 3 | COUCHE 4 | COUCHE 5 | | | | | | | |
| ?A | F1 | PPm (e=200μm) | UNIFILO aig n°6 | F1 (e=650μm) | F1 (e=650μm) | 5 | 5000 | 110 | 1,2 | 13 | 210 | EXCELLENT |
| ?A | F1 | F1 | PPm (e=100μm) | UNIFILO aig n°6 | PPm (e=100μm) | 2 | 3600 | 56 | 1,1 | 22 | 230 | BON |
| ?A | F1 | 100% PP (e=650μm) | UNIFILO aig n°6 | 100% PP (e=650μm) | UNIFILO aig n°6 | 3 | 3200 | 68 | 1,3 | 34 | 250 | MAUVAIS |
| ?A | Fφ | 80 % PP 20 % BVp (e=650μm) | UNIFILO aig n°6 | 100% PP (e=650μm) | UNIFILO aig n°6 | 4 | 3800 | 70 | 1,3 | 14 | 220 | MAUVAIS |

EP 0 546 929 A1

**Revendications**

1. Plaque thermoplastique renforcée estampable dont au moins l'une des faces est constituée, de l'extérieur vers l'intérieur, d'au moins trois couches successives abc, dans laquelle :
   - a est une matrice constituée d'une résine thermoplastique renforcée par au moins deux charges de natures et/ou de types différents choisies parmi les charges de type lamellaire et de type sphérique ou sensiblement sphérique, la viscosité de la matrice mesurée avec un rhéomètre capillaire, aux températures de fabrication et de mise en oeuvre des plaques et à un taux de cisaillement de $20s^{-1}$, étant comprise entre 450 et 2000 Pa.s,
   - b est un liant d'interface chimiquement compatible avec la résine thermoplastique de la matrice a, dont la viscosité , mesurée dans les mêmes conditions que celle de la matrice a, est comprise entre 10 et 350 Pa.s ; et
   - c est un renfort consistant en un mat de verre aiguilleté.

2. Plaque selon la revendication 1, caractérisée en ce que les charges de renforcement de la résine thermoplatique ont une granulométrie moyenne inférieure ou égale à 80 µm.

3. Plaque selon la revendication 1, caractérisée en ce que les charges de renforcement de la résine thermoplatique ont une granulométrie moyenne comprise entre 1 et 40 µm.

4. Plaque selon la revendication 1, 2 ou 3, caractérisée en ce que les charges de type lamellaire sont choisies parmi le mica, la wollastonite et les whiskers.

5. Plaque selon la revendication 1, 2 ou 3, caractérisée en ce que les charges de type sphérique ou sensiblement sphérique sont choisies parmi le talc, des billes de verre pleines ou creuses et $CaCO_3$.

6. Plaque selon la revendication 1, 2, 3, 4 ou 5, caractérisée en ce que ses deux faces sont constituées, de l'extérieur vers l'intérieur, d'au moins trois couches successives abc.

7. Plaque selon la revendication 1, 2, 3, 4, 5 ou 6, caractérisée en ce qu'elle comporte une ou plusieurs épaisseurs d'une structure à quatre couches successives abca ou à cinq couches successives abcba.

8. Plaque selon l'une quelconque des revendications précédentes, caractérisée en ce que la résine thermoplastique de la matrice a est renforcée par au moins trois charges dont l'une au moins est de nature et/ou de type différent(s) de celui(ceux) des autres charges.

9. Plaque selon l'une quelconque des revendications précédentes, caractérisée en ce qu'elle comprend 30 à 80 % en poids et/ou 53 à 90 % en volume de résines thermoplastiques constituant la matrice a.

10. Plaque selon l'une quelconque des revendications précédentes, caractérisée en ce qu'elle comprend 14 à 50 % en poids et/ou 27 à 35 % en volume et de préférence au moins 30 % en volume de charges de renforcement dans la matrice a.

11. Plaque selon l'une quelconque des revendications précédentes, caractérisée en ce qu'elle comprend 15 à 40 % en poids et/ou 8 à 20 % en volume et de préférence 8 à 12 % en volume de mat de verre constituant le renfort c.

12. Plaque selon l'une quelconque des revendications précédentes, caractérisée en ce que les résines thermoplastiques constituant la matrice a sont choisies parmi :
    - les résines polyesters telles que le polyéthylène téréphtalate (PET), le polybutylène téréphtalate (PBT),
    - les résines polyamides telles que les polyamides aliphatiques PA-6, PA-6/6, PA-11, PA-12, PA-12/12, leurs mélanges et/ou leurs copolymères,
    - les résines polyoléfines, seules en mélange et/ou copolymérisées telles que le polypropylène (PP), le polyéthylène (PE), le polyméthylpentène,
    - les résines polysulfones aromatiques, telles que le polysulfone, le polyallylsulfone,
    - les résines polyester polyacétal sulfones,

- les résines polycarbonates,
- les résines polyétherimides,
- les résines polyester cétones,
- les résines ABS,
- les résines acryliques,

et de préférence parmi les résines à base de PP, PET, PBT, les mélanges ou alliages à base de PP/PA-6 ou PP/PA-6.6.

13. Plaque selon l'une quelconque des revendications précédentes, caractérisée en ce que le mat de verre aiguilleté constituant le renfort c a une masse surfacique comprise entre 225 et 900 g/m², et de préférence entre 300 et 600 g/m², une masse linéique comprise entre 10 et 125 tex et des fils de diamètres moyens compris entre 5 et 30 µm et, de préférence, une masse linéique comprise entre 10 et 25 tex et des fils de diamètres moyens compris entre 10 et 20 µm.

14. Articles et pièces moulés obtenus par estampage d'une ou plusieurs plaques selon l'une quelconque des revendications 1 à 13, l'une au moins des surfaces de ces articles et pièces étant constituée, de l'extérieur vers l'intérieur d'au moins trois couches successives abc, dans lesquels :
    - a est une matrice constituée d'une résine thermoplastique renforcée par au moins deux charges de nature et/ou de type différents choisies parmi les charges de type lamellaire et de type sphérique ou sensiblement sphérique ;
    - b est un liant d'interface chimiquement compatible avec la résine thermoplastique de la matrice a, et présentant par rapport à celle-ci, une viscosité inférieure aux températures de fabrication et de mise en oeuvre des plaques ; et
    - c est un renfort consistant en un mat de verre aiguilleté.

## FIG.1

## FIG.2

## FIG.3

## FIG.4

## FIG.5

Office européen
des brevets

**RAPPORT DE RECHERCHE EUROPEENNE**

Numero de la demande

EP    92 40 3328
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 469 543 (LEON SEGAL ET AL.)<br><br>* colonne 1, ligne 45 - colonne 2, ligne 53; revendications *<br>* colonne 3, ligne 30 - colonne 4, ligne 18 *<br>* colonne 4, ligne 52 - colonne 5, ligne 17 *<br>* colonne 6, ligne 36 - ligne 52 * | 1,6,7,9, 10,12,14 | B32B27/04<br>B29C67/12<br>B29C67/14<br>B29C67/16<br>B29B11/16 |
| Y |  | 2-5,8 | |
| Y | Derwent Publications Ltd., London, GB; AN 85-273774 (44)<br>& JP-A-60 186 554 (SEKISUI CHEM. IND. KK) 24 Septembre 1985<br>* abrégé * | 2-5,8 | |
| X | FR-A-2 325 504 (ALLIED CHEMICAL CORPORATION)<br>* page 4, ligne 27 - page 5, ligne 8 *<br>* page 9, ligne 11 - page 10, ligne 20 *<br>* page 12, ligne 7 - ligne 26 *<br>* page 13, ligne 26 - ligne 37 * | 1,5, 11-14 | |
| P,X | EP-A-0 461 965 (ATOCHEM)<br>* page 3, ligne 6 - ligne 30; revendications; exemples *<br>* page 2, ligne 39 - ligne 49 * | 1-14 | **DOMAINES TECHNIQUES RECHERCHES (Int. Cl.5)**<br><br>B32B |
| A | EP-A-0 013 089 (IMPERIAL CHEMICAL INDUSTRIES LIMITED)<br>* page 4, ligne 8 - ligne 13; revendications 1,4 *<br>* page 3, ligne 31 - page 4, ligne 7 * | 1-5,12, 14 | |

-/--

Le présent rapport a été établi pour toutes les revendications

| Lieu de la recherche | Date d'achèvement de la recherche | Examinateur |
|---|---|---|
| LA HAYE | 22 FEVRIER 1993 | PAMIES OLLE S. |

Office européen
des brevets

**RAPPORT DE RECHERCHE EUROPEENNE**

Numero de la demande

EP 92 40 3328
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 342 147 (ALLIED CHEMICAL CORPORATION)<br>* page 2, ligne 24 - ligne 35; revendications 1,4-6 *<br>* page 2, ligne 66 - ligne 81 *<br>* page 3, ligne 45 - ligne 72 * | 1,5,12,14 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 22 FEVRIER 1993 | PAMIES OLLE S. |